**Europäisches Patentamt**

**European Patent Office**

**Office européen des brevets**

(19)

(11) Veröffentlichungsnummer: **0 004 976**
**B1**

(12) **EUROPÄISCHE PATENTSCHRIFT**

(45) Veröffentlichungstag der Patentschrift:
**30.12.81**

(51) Int. Cl.³: **G 09 F 13/00**, G 08 B 5/00 //
B60Q1/30, E01F9/10

(21) Anmeldenummer: **79101206.5**

(22) Anmeldetag: **20.04.79**

(54) **Universal-Warnstreifen.**

(30) Priorität: **24.04.78 PL 206358**

(43) Veröffentlichungstag der Anmeldung:
**31.10.79 Patentblatt 79/22**

(45) Bekanntmachung des Hinweises auf die Patenterteilung:
**30.12.81 Patentblatt 81/52**

(84) Benannte Vertragsstaaten:
**BE CH DE FR GB IT NL SE**

(56) Entgegenhaltungen:
**DE-C- 544 658**
**DE-C- 877 720**
**FR-A- 883 844**
**FR-A-2 196 099**
**FR-A-2 394 418**

(73) Patentinhaber: **Ministerstwo Komunikacji - Departament Komunikacji Drogewej, ul. Chalubinskiego Nr. 4/6, Warschau (PL)**

(72) Erfinder: **Wardecki, Andrzej, Dipl.-Ing., ul. Dunajecka 15 m. 12, Warschau (PL)**

(74) Vertreter: **Eitle, Werner, Dipl.Ing. et al, Arabellastrasse 4 Sternhaus, D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

Universal-Warnstreifen

Die Erfindung bezieht sich auf einen Universal-Warnstreifen, der vorwiegend zur Anbringung an der Rückseite von Festlandfahrzeugen, im besonderen an für den Strassenverkehr bestimmten Fahrzeugen bestimmt ist. Der Warnstreifen dient zur visuellen Warnung und Unterrichtung von Fahrzeugführern, insbesondere in der Nacht, über die Anwesenheit eines vorausfahrenden Fahrzeuges und zur Erleichterung der Ermittlung der Entfernung dieses Fahrzeuges, der Änderungen dieser Entfernung, der Fahrzeugbreite und -länge und in gewissem Masse auch der Fahrzeugart oder seiner anderen Merkmale. Der Universal-Warnstreifen gehört vor allem in das Gebiet der visuellen Warn-Meldevorrichtungen von Fahrzeugen.

Es sind aktive visuelle Warn-Meldevorrichtungen von Fahrzeugen in Form von in Leuchten untergebrachten Lichtquellen, zu denen vor allem Schlusslichte zählen, sowie passive visuelle Warn-Meldevorrichtungen bekannt, zu denen Rückstrahler zählen.

Die beiden Arten von visuellen Warnvorrichtungen dienen vor allem zur Unterrichtung der Verkehrsteilnehmer in der Nacht und bei ungünstigen atmosphärischen Bedingungen auch am Tag über die Anwesenheit von Fahrzeugen auf dem Wege. Ihre zweite Funktion besteht in der Übertragung von Information über die Querabmessungen des Fahrzeuges, was sie dadurch ermöglichen, dass sie nahe den Seitenrändern des Fahrzeuges angeordnet sind. Die Rückstrahler gestatten dazu eine Sicherung für den Fall, dass die Leuchten gelöscht oder beschädigt werden. Manche Fahrzeuge werden zusätzlich mit Umriss-Warnlichtern ausgestattet, deren Aufgabe in der genaueren Unterrichtung über die erhöhten Querabmessungen des Fahrzeuges besteht. In der Regel wird jede der genannten visuellen Warnvorrichtungen auf den Fahrzeugen symmetrisch und zweifach angeordnet.

Die beschriebenen Lösungen weisen jedoch Nachteile auf. Die Mehrheit dieser Nachteile ist mit der Tatsache verbunden, dass die Fahrzeuge aus einzelnen Fabriken von unterschiedlichen Typen und Arten unterschiedliche Breiten aufweisen und unterschiedliche visuelle Warnvorrichtungen besitzen, die sich insbesondere durch Lichteigenschaften, Grösse, Gestalt, Abstand u. dgl. unterscheiden. Bei richtigem Arbeiten ermöglichen sie zwar die Wahrnehmung des Fahrzeuges in grosser Entfernung, es ist aber infolge der erwähnten Unterschiede visueller Warnvorrichtungen eine Einschätzung dieser Entfernung in der Regel erst in der letzten Näherungsphase möglich, d.h. dann, wenn die Entfernung zwischen den Fahrzeugen klein oder gefährlich klein ist. Da die Zahl von Verkehrsunfällen, die in der Nacht durch Auffahren eines Fahrzeuges auf den hinteren Teil eines anderen entstehen, hoch ist, sind mehrere Fahrzeughersteller bestrebt, dies zu verhindern, indem sie intensiver leuchtende oder lichtreflektierende visuelle Warnvorrichtungen einsetzen oder deren Oberfläche vergrössern. Dies hat jedoch andere negative Folgen, z.B. in Form oft auftretender Blendung, die die Unterscheidungsmöglichkeit der Entfernung von einem Fahrzeug, seiner Querabmessungen wie auch die Wahrnehmung anderer wichtiger Einzelheiten oder schwächer beleuchteter Fahrzeuge einschränkt. Bei der Suche nach Wegen zur Erhöhung der Sicherheit des Nachtstrassenverkehrs nimmt man in manchen Ländern sogar an, dass die Funktion einer zusätzlichen visuellen Warnvorrichtung das hintere Nummernschild mit einem reflektierenden Hintergrund spielen kann.

Oft auftretende Missverständnisse und fehlende Sicherheit bezüglich der tatsächlichen Entfernung von dem vorausfahrenden Fahrzeug ergeben sich auch aus der Schwierigkeit der Durchführung einer schnellen und eindeutigen Interpretation der Merkmale, der gegenseitigen Zusammenhänge und der in einer Gruppe von Elementen der beobachteten Signalisation vorkommenden Änderungen, insbesondere dann, wenn die Gestalt des Fahrzeuges oder der Weg schlecht sichtbar ist. Als Beispiel kann angegeben werden, dass bisher verwendete wenig intensive Leuchten oder Reflektorvorrichtungen von geringen Abmessungen und kleinem Abstand, die niedrig am Fahrzeug angebaut sind, vorwiegend als zu einem wesentlich weiter entfernten Fahrzeug gehörend erkannt werden als ein Paar von grossen, intensiven, höher über der Fahrbahn angeordneten und weiter voneinander entfernten Leuchten.

Für die Verkehrssicherheit ist es auch wichtig, z.B. vor dem Überholen auf einem engen Wege, früh Bescheid zu wissen, wie breit das vorausfahrende Fahrzeug ist und welcher Teil der Wegbreite besetzt ist. Die Einschätzung der Querabmessungen des Fahrzeuges ist jedoch erst bei verhältnismässig kleiner Entfernung möglich, d.h. dann, wenn die Leuchten des Fahrzeuges oder seine reflektierenden Vorrichtungen als scharf abgetrennte Lichtflecke sichtbar sind oder wenn andere Fahrzeugteile erkennbar sind. Wie bekannt, geben die zur Zeit verwendeten visuellen Warnvorrichtungen lediglich angenäherte Angaben über die Querabmessungen der Fahrzeuge und nicht über ihre Breite an, während eben die Erkennung der Breite des vorausfahrenden Fahrzeuges oft über die Sicherheit während des Überholens und während anderer Manöver entscheidet und eine frühere oder genauere Erkennung der Entfernung der beiden Fahrzeuge ermöglicht.

Die bestehenden Vorrichtungen weisen noch einen Nachteil auf, der insbesondere bei asymmetrischer, d.h. nur an einer Seite des Fahrzeuges auftretender Beschädigung oder Verblendung des Lichtes oder der Reflektorvorrichtung vorkommt. Bei sehr schwacher Erkennbarkeit oder bei grosser Verkehrsdichte der Fahrzeuge kann der hinten fahrene Fahrzeugführer besonders leicht annehmen, dass die beobachteten Lichter zu zwei verschiedenen Fahrzeugen gehören oder dass das beobachtete Fahrzeug schmäler als tatsächlich ist oder auch, dass es sich in einer anderen Entfernung befindet.

Die rasch in mehreren Ländern zunehmende Anzahl von langen Fahrzeugen hat das bereits früher wahrgenommene Problem verstärkt, welches in der Gefahr des Überholens solcher Fahrzeuge besteht, die sich aus zu später Erkennung deren Länge ergibt. Wie bekannt, gibt keine der bestehenden visuellen Warnvorrichtungen und keine Anbauweise dieser Vorrichtungen eine Information über die Länge des von hinten gesehenen Fahrzeuges an. Es wird versucht, dieses Problem durch Anbringen reflektierender Schilder mit schrägen, zweifarbigen Streifen und einem Schild mit der Aufschrift in englischer Sprache – «langes Fahrzeug» – am hinteren Ende von langen Fahrzeugen verschiedener Gestalt und Grösse zu lösen. Ähnlich werden auch manchmal breite Fahrzeuge von nicht typischer Bestimmung oder Konstruktion bezeichnet.

Obwohl gewisse Vorteile solcher Bezeichnung nicht zu verkennen sind, ist es offensichtlich, dass diese Lösung die bereits übermässigen Unterschiede der Formen der hinteren Warnanzeigen der Fahrzeuge noch vergrössert.

Der Erfindung liegt die Aufgabe zugrunde, beim Einsatz für Fahrzeuge die oben genannten Nachteile der zur Zeit verwendeten, auf Fahrzeugen einzusetzenden visuellen Warnvorrichtungen zu beseitigen und mittels der erfindungsgemässen Vorrichtung zu gewährleisten, dass den Fahrzeugführern neue und wichtige und zugleich genauere und empfangsleichte visuelle Informationen über manche Merkmale des Fahrzeuges und seiner Lage auf dem Wege übermittelt werden. Der Universal-Warnstreifen in reflektierender Ausführung hat vor allem die Aufgabe, die zur Zeit auf Fahrzeugen eingesetzten Reflektorvorrichtungen zu ersetzen.

Diese Aufgabe wird mit einem Universal-Warnstreifen, bestehend aus Elementen passiver visueller Signalisation, d.h. aus lichtreflektierenden Elemente, z.B. aus Reflexionsvorrichtungen, allein oder einer Reflexionsvorrichtung grösserer Oberfläche hinter einer perforierten Blende, oder aus Elementen aktiver visueller Signalisation, d.h. aus lichtausstrahlenden Elementen, z.B. aus Glühlampen oder einer Lichtquelle oder Reflexionsvorrichtung grösserer Oberfläche hinter einer perforierten Blende, erfindungsgemäss dadurch gelöst, dass der Warnstreifen ein optisches Signalfeld aufweist, das aus passiven oder aktiven Lichtelementen zusammengesetzt ist, welche Elemente auf einem dunklen Hintergrund oder auf einem Hintergrund, der Licht stärker oder schwächer als die Elemente ausstrahlt oder reflektiert, in Gruppen geordnet mit gleichen Abständen zwischen den Lichtelementen innerhalb der Gruppen angeordnet sind, dass die Gruppen in Gruppenkomplexen geordnet sind, innerhalb welcher die Abstände zwischen den Gruppen gleich, jedoch grösser als die Abstände zwischen den Lichtelementen innerhalb der Gruppen sind, und dass die Gruppenkomplexe in Komplexsätzen geordnet sind, innerhalb welcher die Abstände zwischen den Gruppenkomplexen gleich, jedoch grösser als die Abstände zwischen den Gruppen innerhalb der Gruppenkomplexe sind. In Weiterbildung der Erfindung ist eine weitere Vergrösserung des Signalfeldes auf analoge Weise, d.h. durch immer grössere Abstände zwischen aufeinanderfolgenden Zusammenstellungsarten Arten von Lichtelementen, erreicht, wobei sowohl die Lichtelemente als auch die einzelnen Zusammenstellungsarten dieser Lichtelemente geometrische Figuren unterschiedlicher Formen bilden.

Da der Universal-Warnstreifen eine aus einer gewissen Anzahl von das Licht ausstrahlenden oder reflektierenden Lichtelemente zusammengesetzte Vorrichtung ist, d.h. entweder eine selbständig leuchtende oder reflektierende Vorrichtung sein kann, sein Aufbau und seine Wirkungsweise in den beiden Arten fast identisch sind und die Bestimmung gleich ist, kann die weitere Beschreibung der Erfindung auf die reflektierende Ausführung bezogen werden.

Die gestellte Aufgabe wurde durch Schaffung eines speziellen optischen Signalfeldes gelöst, das aus passiven oder aktiven Lichtelementen zusammengesetzt ist, wobei die passiven oder aktiven Lichtelemente derart auf einem dunklen oder unterschiedlich das Licht reflektierenden oder aussendenden Hintergrund angeordnet sind, dass diese Lichtelemente in Gruppen, beispielsweise Reihen, geordnet sind, innerhalb welcher die Abstände zwischen den Lichtelementen gleich sind, die Gruppen in Gruppenkomplexen, beispielsweise Modulen, mit gleichen Abständen zwischen den einzelnen Gruppen geordnet sind, wobei jedoch diese Abstände grösser sind als die Abstände zwischen den Lichtelementen, und die Gruppenkomplexe in Komplexsätzen, beispielsweise Modulreihen, geordnet sind, innerhalb welcher die Abstände zwischen den Gruppenkomplexen gleich sind, jedoch grösser als die Abstände zwischen den Gruppen innerhalb der Gruppenkomplexe, wobei eine weitere Vergrösserung des Signalfeldes auf analoge Weise, d.h. durch immer grössere Abstände zwischen den aufeinanderfolgenden Zusammenstellungsarten von Lichtelementen, erreicht wird und sowohl die Lichtelemente als auch die einzelnen Zusammenstellungsarten dieser Lichtelemente unterschiedliche geometrische Figuren bilden.

Unter Berücksichtigung der grundsätzlichen Bestimmung der erfindungsgemässen Vorrichtung, die im Einsatz auf den Fahrzeugen besteht, ist die bevorzugte Lösung eine solche Ausführung des Signalfeldes, dass eine entsprechend hinsichtlich der Form, der Abmessungen und des Lichtreflexionsgrades gewählte Anzahl von reflektierenden Elementen gleichförmig in zwei übereinanderliegenden waagerechten Reihen unter Erhaltung entsprechend differenzierter Abstände zwischen den Elementen und den Reihen angeordnet wird, wodurch ein einzelner Warn-Informationsmodul gebildet wird. Durch Anordnung von zwei Paaren solcher Reihen, d.h. von zwei einzelnen Modulen übereinander unter Erhaltung eines entsprechend gewählten, aber grösseren Abstandes zwischen diesen Paaren, wird ein doppelter Warn-Informationsmodul gebildet. Die Anordnung nebeneinander, d.h. in horizontaler Richtung, einer gewissen Anzahl von einfachen Modulen unter Erhaltung eines entsprechend gewählten Abstandes zwischen diesen Modulen, bildet die einfache Ausführung des erfindungsgemässen Warnstreifens. Analog wird aus nebeneinander mit gleichen Abständen angeordneten zweifachen Modulen die zweifache Ausführung des Warnstreifens gebildet.

Der Universal-Warnstreifen beliebiger Ausführung, der in einer senkrechten oder von dieser unmerklich abweichenden Ebene angeordnet und am hinteren Teil des Fahrzeuges angebaut werden soll, sollte so lang werden, dass das dadurch gebildete, an die Breite des Fahrzeuges angepasste Signalfeld höchstmögliche ganze Zahl von Modulen enthält. Die einfache Ausführung des Universal-Warnstreifens ist zum Kennzeichnen von Fahrzeugen von kurzer und mittlerer Länge und die zweifache Ausführung des Universal-Warnstreifens zum Kennzeichnen von langen Fahrzeugen bestimmt. Die Bestimmung der Länge der Fahrzeuge, die eine Grenze zwischen den beiden Ausführungen darstellen soll, sollte nach Berücksichtigung der die Verkehrssicherheit und die Konstruktion der Fahrzeuge betreffenden Aspekte abgestimmt werden.

Der Universal-Warnstreifen mit einem beispielsweise aus fünf Modulen zusammengesetzten Signalfeld, sein Bild gesehen aus verschiedenen Entfernungen, und das Einsatzprinzip ist im folgenden anhand von Ausführungsbeispielen und der Zeichnungen näher beschrieben. In den Zeichnungen zeigen:

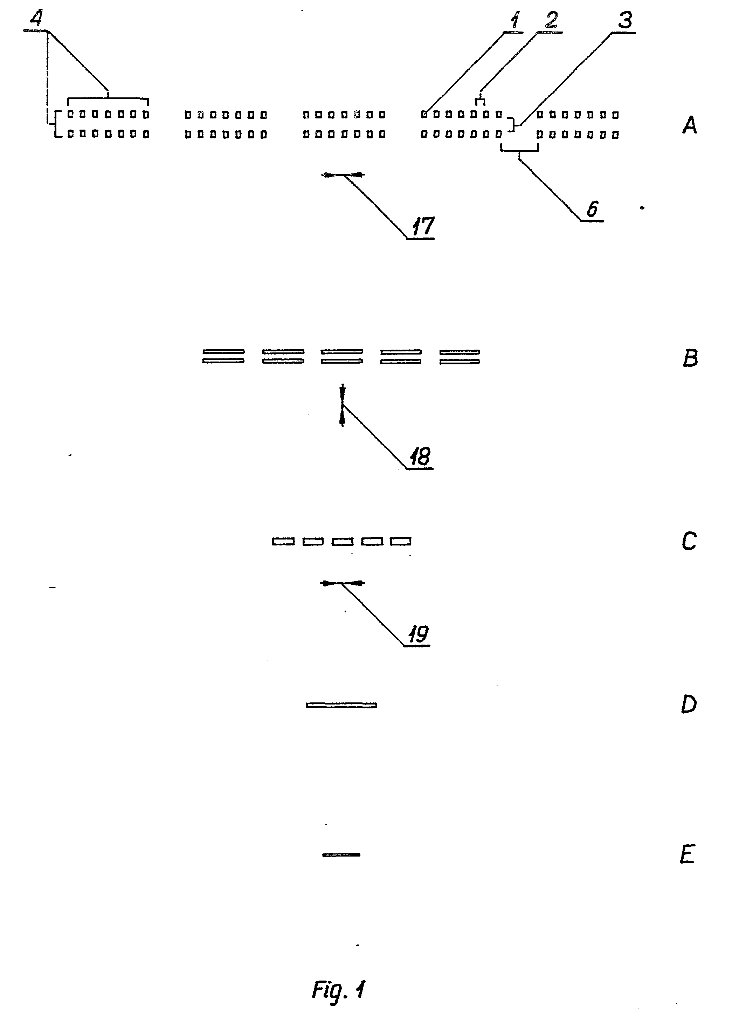

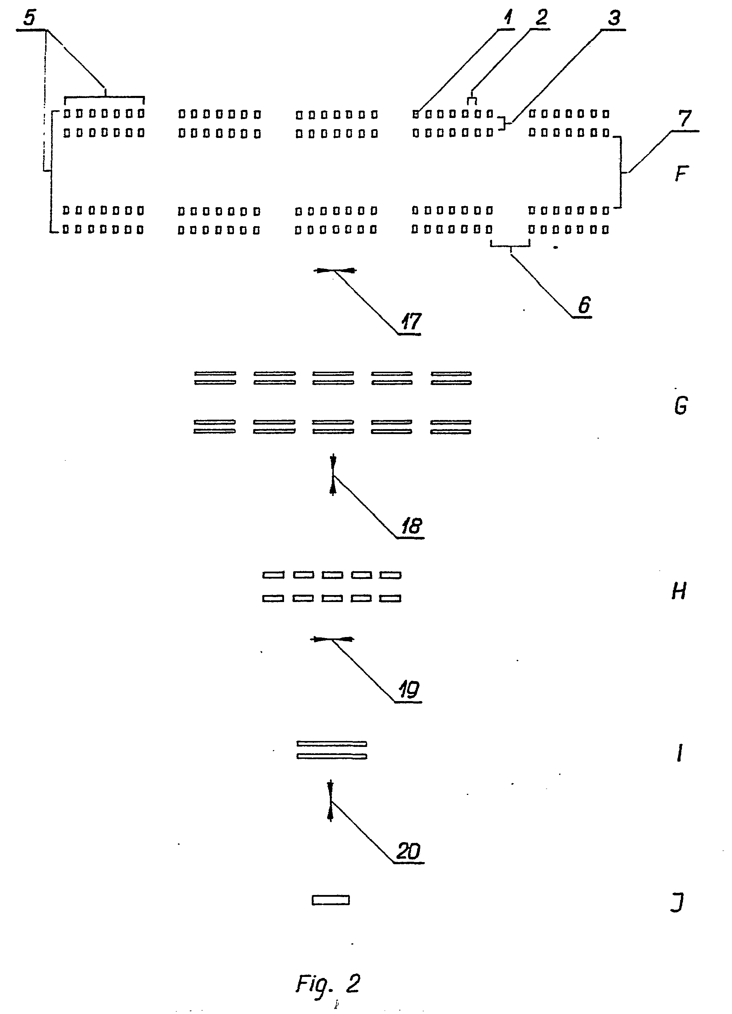

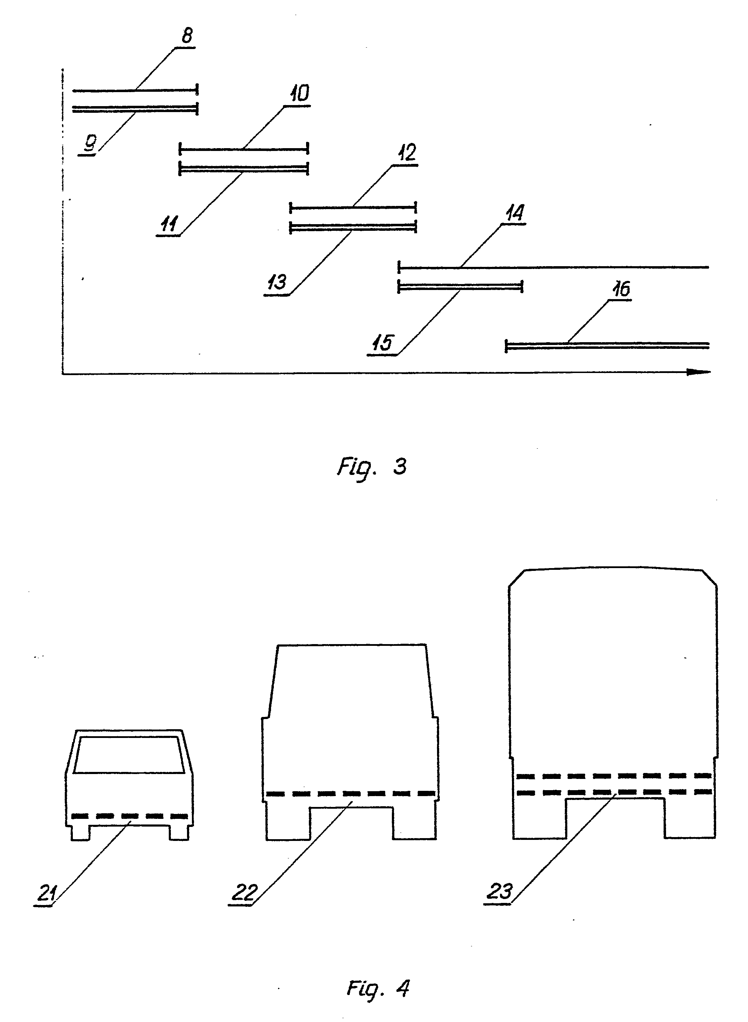

Fig. 1 das Bild der einfachen Ausführung des Universal-Warnstreifens in den einzelnen Deutlichkeitsintervallen, wobei unter A das Bild des Streifens, gesehen aus unmittelbarer Nähe, d.h. in dem ersten Deutlichkeitsintervall, unter B desselben Streifens, gesehen im zweiten Deutlichkeitsintervall, unter C im dritten Deutlichkeitsintervall, unter D im vierten Deutlichkeitsintervall und unter E auch im vierten Deutlichkeitsintervall, jedoch gesehen aus der dem fünften Deutlichkeitsintervall der zweifachen Streifenausführung entsprechenden Entfernung, dargestellt ist, Fig. 2 das Bild der zweifachen Ausführung des Universal-Warnstreifens in den einzelnen Deutlichkeitsintervallen, wobei unter F das Bild des Streifens, gesehen aus unmittelbarer Nähe, d.h. im ersten Deutlichkeitsintervall, unter G desselben Streifens, gesehen im zweiten Deutlichkeitsintervall, unter H im dritten Deutlichkeitsintervall, unter I im vierten Deutlichkeitsintervall und unter J im fünften Deutlichkeitsintervall, dargestellt ist, Fig. 3 die Reihenfolge und Lage der einzelnen Deutlichkeitsintervalle der beiden Ausführungen des Universal-Warnstreifens in Abhängigkeit von der Entfernung des Beobachters von der Vorrichtung, und Fig. 4 Einsatzbeispiele beider Ausführungen des Universal-Warnstreifens auf verschiedenen Fahrzeugen.

Wie beispielsweise in Fig. 1 unter A und in Fig. 2 unter F dargestellt, besteht der Universal-Warnstreifen in reflektierendem Aufbau sowohl der einfachen als auch der zweifachen Ausführung aus entsprechend angeordneten Reflexions- oder Lichtelementen 1, von denen zwei horizontale Reihen mit gleichen horizontalen Abständen 2 zwischen diesen Lichtelementen und gleichen Abständen 3 zwischen den Reihen einen einzelnen Warn-Informationsmodul 4, und ein Paar von solchen übereinander unter Erhaltung eines entsprechenden senkrechten Abstandes 7 angeordneten einzelnen Modulen einen zweifachen Warn-Informationsmodul 5 bilden.

Der Universal-Warnstreifen enthält eine beliebige, entsprechend ausgewählte Anzahl von horizontalen in Reihen geordneten einzelnen – bei der einfachen Ausführung oder zweifachen bei der zweifachen Ausführung – Warn-Informationsmodulen, wobei die entsprechend ausgewählten horizontalen Abstände 6 zwischen den Modulen gleich sind.

Alle oben genannten Abstände sind entsprechend differenziert, wobei der kleinste der Abstand 2, gegenüber diesem grösser der Abstand 3, noch grösser der Abstand 6 und der grösste der Abstand 7 ist.

Das Reflexions- oder Lichtelement 1 ist in dem angegebenen Ausführungsbeispiel rechteckförmig, es kann jedoch zwecks der Modifizierung der Effekte der Vorrichtung die Form einer anderen geometrischen Figur aufweisen oder einen aus einigen kleineren Figuren zusammengesetzten Satz bilden.

Bei der Beobachtung des Universal-Warnstreifens unter den Bedingungen, für welche er grundsätzlich bestimmt ist, also in der Nacht, in den Lichtern des Fahrzeuges, von welchem aus die Beobachtung erfolgt, werden aus der unmittelbaren Nähe alle Einzelheiten erkannt, wie das in Fig. 1 unter A dargestellt ist. Mit zunehmender Entfernung werden die Einzelheiten und Formen vereinfacht, wobei zunächst eine scheinbare Verbindung der geometrischen Figuren erfolgt, die durch den kleinsten Abstand voneinander getrennt sind. Der Bereich der Entfernung der Beobachtung, von der kleinstmöglichen bis zu der, bei welcher der Beobachter schon nicht mehr die kleinsten Lichtelemente 1 erkennt, sondern sie als eine Ganzheit zu sehen beginnt, wurde als erstes Deutlichkeitsintervall bezeichnet, wobei dieser Bereich für die beiden Ausführungen der Vorrichtung gleich ist. In Fig. 3 ist das erste Deutlichkeitsintervall der einfachen Streifenausführung mit 8 und der zweifachen Ausführung mit 9 bezeichnet.

Im zweiten Deutlichkeitsintervall 10 der einfachen Ausführung wird der Streifen dieser Ausführung so erkannt, wie es in Fig. 1 unter B dargestellt ist, und im zweiten Deutlichkeitsintervall 11 der zweifachen Ausführung wird der Streifen dieser Ausführung so erkannt, wie es in Fig. 2 unter G dargestellt ist.

Bei weiterer Zunahme der Beobachtungsentfernung, die innerhalb des dritten Deutlichkeitsintervalles 12 bzw. 13 der einfachen Ausführung bzw. der zweifachen Ausführung liegt, erfolgt eine weitere scheinbare Verbindung der Lichtflecken, wobei der Universal-Warnstreifen der einfachen Ausführung so erkannt wird, wie es in Fig. 1 unter C dargestellt ist, und derjenige der zweifachen Ausführung, wie es in Fig. 2 unter H dargestellt ist.

Wird die Entfernung noch grösser und befindet sich in dem vierten Deutlichkeitsintervall 14 bzw. 15 der einfachen bzw. der zweifachen Ausführung, so wird das Bild der Vorrichtung noch mehr vereinfacht und die einfache Ausführung wird so erkannt, wie es in Fig. 1 unter D dargestellt ist, und die zweifache Ausführung dagegen, wie es in Fig. 2 unter I dargestellt ist. Eine weitere Zunahme der Beobachtungsentferung bringt schon keine Vereinfachung des Bildes des Streifens der einfachen Ausführung mehr, sondern wird nur dessen Winkelabmessungen vermindern, wie es in Fig. 1 unter E gezeigt ist. Die zweifache Ausführung der beschriebenen Vorrichtung kommt dann aber in das fünfte Deutlichkeitsintervall 16, was sich in dem Bild wie in Fig. 2 unter J ausdrückt. In dem angegebenen Ausführungsbeispiel des Universal-Warnstreifens haben die letzten Deutlichkeitsintervalle, d.h. das Intervall 14 des Streifens der einfachen Ausführung und das Intervall 16 des Streifens der zweifachen Ausführung, keine definierte Begrenzung des maximalen Bereiches.

Das Wirkungsprinzip und die Ausnutzung der beschriebenen Vorrichtung besteht vor allem darin, dass die Grösse und Form der Reflexionsoder Lichtelemente 1 und die Abstände 2, 3, 6 und 7 sowie die Länge der Module 4 und 5 so gewählt sind, dass sie eine Reihe von abwechselnden, d.h. in horizontaler und vertikaler Richtung auftretenden scheinbaren Verbindungen von sich nacheinander ausbildenden Lichtflecken hervorrufen, wenn die Beobachtungsentfernung zunimmt, und von scheinbaren Trennungen, wenn die Entfernung abnimmt.

Die Richtungen der scheinbaren Verbindung der Lichtflecken in dem Bild beider Ausführungen des Universal-Warnstreifens, je nach der Entfernung der Beobachtung, sind in Fig. 1 und in Fig. 2 dargestellt, gemäss welchen zunächst bei zunehmender Entfernung die scheinbare Annäherung von benachbarten Lichtflecken in horizontaler Richtung 17 überwiegt, was zu deren scheinbarer Verbindung am Anfang des zweiten Deutlichkeitsintervalles führt. In dem zweiten Deutlichkeitsintervall erfolgt die überwiegende Annäherung von bereits anderen Lichtflecken in vertikaler Richtung 18 und deren scheinbare Verbindung erfolgt am Anfang des dritten Deutlichkeitsintervalls. In diesem Intervall verlaufen die Richtungen der überwiegenden scheinbaren Verbindung von benachbarten Lichtflecken in horizontaler Richtung 19. In dem Bild der einfachen Ausführung des Streifens ist sowohl die Umformung der Lichtflecken wie auch die Änderungen der Richtungen der scheinbaren Verbindung von Lichtflecken beendet, während bei der Beobachtung der zweifachen Ausführung des Streifens noch eine in senkrechter Richtung 20 vorkommende scheinbare Verbindung der Lichtflecken auftritt.

In Fig. 4 sind Anwendungsbeispiele des Universal-Warnstreifens auf verschiedenen Fahrzeugen dargestellt, wobei der Streifen beispielsweise in dem dritten Deutlichkeitsintervall, an einem Personenkraftwagen 21, einem Lastkraftwagen mittlerer Länge 22 und einem Lastkraftwagen 23 bedeutender Länge oder mit einem Anhänger beobachtet wird.

Der Bau und das Einsatzprinzip des Universal-Warnstreifens wurde vor allem auf solchen grundsätzlichen physischen Erscheinungen und Gesetzen sowie physiologischen Eigenschaften des Menschen wie Lichtstreuung in der Luft, Bestrahlung, Auflösungsvermögen des menschlichen Auges, Entfernungseinschätzungsmöglichkeit beim binokularen Sehen und Gefühl der Akkomodationsänderungen des Auges begründet. Das betrifft auf ähnliche Weise sowohl den Streifen in Relexionsausführung als auch in selbstleuchtender Ausführung, d.h. solcher, in welcher gesonderte, als Lichtquellen wirkende Lichtelemente wie Glühbirnen oder Lichtleiterbündel vorgesehen sind, oder die so ausgeführt sind, dass eine grössere Lichtquelle hinter einer perforierten Blende angeordnet ist, was einen ähnlichen Effekt ergibt.

Die erwähnten physischen Erscheinungen und physiologischen Eigenschaften des Menschen sind selbstverständlich völlig unabhängig davon, ob die bisher anzuwendenden visuellen Warnvorrichtungen oder der Universal-Warnstreifen beobachtet wird. Es soll jedoch unterstrichen werden, dass während die meisten Erscheinungen, wie z.B. die Lichtstreuung oder Bestrahlung, mit zunehmender Beobachtungsentfernung wesentlich die Leistungsfähigkeit der zur Zeit anzuwendenden Vorrichtungen, unter anderem durch Ausbildung der ringsum dieser Vorrichtungen entstehenden, die Erkennung der Einzelheiten erschwerenden Phosphoreszenz, vermindert, diese in dem Wesen und Bau des Universal-Warnstreifens vollkommen berücksichtigt und ausgenutzt werden.

Da die beschriebene Vorrichtung z.B. aus allgemein zugänglicher und kommerziell erhältlicher Reflexionsfolie ausgeführt werden kann, wenig Platz am Stossfänger oder auf der Karosserie einnimmt, auf allen gegenüber der Länge eines Moduls breiteren Fahrzeugen eingesetzt werden kann, vereinheitlicht werden soll, also gleiche und allen bekannte Modulabmessungen aufweisen soll und dabei unterschiedliche Anbauhöhe in kleinerem Ausmass die Richtigkeit der Einschätzung beeinflusst als bei den bisher anzuwendenden Vorrichtungen, kann man annehmen, dass der beschriebene Warnstreifen die Kennzeichen der Universalität aufweist.

Eines der Merkmale dieser Vorrichtung, das über ihre hohe Wirksamkeit entscheidet, besteht in den unterschiedlichen Formen der Elemente und geometrischen Figuren, zu welchen die einzelnen Arten dieser Elemente zusammengesetzt sind und die aus verschiedenen Entfernungen als unterschiedliche Lichtflecken erkannt werden. Dieses Merkmal und sich daraus ergebende und mit dem einfachen Bau des Streifens verbundene gute Erkennbarkeit und Feststellungsmöglichkeit der Modulzahl, wie auch gute Erkennbarkeit der einzelnen Deutlichkeitsintervalle bewirkt, dass die Vorrichtung beim Lichteinfall aus den Scheinwerfern des Fahrzeuges des Beobachters, gleichzeitig ausreichend frühe Wahrnehmung des Fahrzeuges, Erkennung der Entfernung von diesem Fahrzeug mit hoher Genauigkeit, Erkennung kleiner Änderungen der Entfernung, Erkennung der Querabmessungen des Fahrzeuges, sehr genaue Ermittlung seiner Breite und Erkennung des Längenintervalls des Fahrzeuges ermöglicht. Andererseits macht diese Vorrichtung unmöglich, dass die Lichter eines Fahrzeuges als Lichter von zwei verschiedenen Fahrzeugen angenommen werden und verhindert das Auffahren auf ein stehendes Fahrzeug, insbesondere in dem Fall, wenn das Warnreflexionsdreieck nicht aufgestellt wurde oder bei starkem Wind umgestürzt ist.

Die Anwendung des Universal-Warnstreifens wird also zu einer wesentlichen Reduktion des Auffahrens auf die auf dem Wege stehenden Fahrzeuge, insbesondere auf unbeleuchtete Fahrzeuge und auf die in gleicher Richtung fahrenden Fahrzeuge führen und die Möglichkeit von sog. Kettenzusammenstössen vermindern, wie auch die Anzahl der Unfälle reduzieren, die infolge des Überholens von Fahrzeugen von vorher nicht erkannter Länge auftreten.

Die endgültige Form der Vorrichtung, also die Abmessungen, die Form, das beste Reflexionsvermögen der Elemente und Abstände aller Art werden vorzugsweise auf experimentellem Wege festgelegt. Der Universal-Warnstreifen in Reflexionsausführung kann entweder Fabrikausrüstung der Fahrzeuge darstellen oder in Form von selbstklebenden Bändern hergestellt werden, die z.B. in Ringen aufbewahrt und so abgeschnitten werden, dass der zum Einsatz auf einem Fahrzeug vorbereitete Bandabschnitt die höchstmögliche ganze Modulzahl enthält. Vorausgesetzt, dass die Farbe der Reflexionselemente z.B. gelb ist, bewirkt die Ausführung der Umgebung dieser Elemente in derselben Farbe, dass er nur in der Nacht bei Beleuchtung durch die Lichter des Fahrzeuges des Beobachters wirkt, während die Ausführung des Hintergrundes z.B. in tiefschwarz in gewissem Masse Effekte am Tage zu erreichen erlaubt, die den oben beschriebenen Effekten in der Nacht angenähert entsprechen.

Es ist auch möglich, dass der Universal-Warnstreifen in selbstleuchtender Ausführung als Hilfskennzeichen in Zonen von Flughäfen oder See- und Flusshäfen Anwendung findet.

Die in der Beschreibung dargestellten Merkmale und Vorteile der erfindungsgemässen Vorrichtung wurden durch Ergebnisse von Versuchen bestätigt.

Kurz umrissen ist die erfindungsgemässe Vorrichtung zum Anbau auf der Rückseite, insbesondere von Kraftfahrzeugen, bestimmt und dient, insbesondere in der Nacht, zur visuellen Unterrichtung der Fahrzeugführer über die Anwesenheit, Entfernung, Breite und Länge des vorausfahrenden Fahrzeuges. Die Vorrichtung besteht aus lichtreflektierenden Elementen, z.B. einer Reflexionsfolie, oder aus lichtausstrahlenden Elementen, z.B. Glühbirnen. Diese Lichtelemente 1, angeordnet in zwei Reihen übereinander und unter Einhaltung gleicher Abstände zwischen den einzelnen Lichtlelementen, bilden einen einfachen Warn-Informationsmodul 4, und ein Paar solcher übereinander angeordneter Module bildet einen zweifachen Warn-Informationsmodul 5. Die Modulanzahl in einem einfachen (Fig. 1) und zweifachen (Fig. 2) Streifen hängt von der Breite des Fahrzeuges ab. Die Lichtelemente 1 und alle Abstände 2, 3, 6 und 7 sind so ausgewählt, dass bei zunehmender Beobachtungsentfernung eine mehrfache scheinbare Verbindung der Lichtflecken zu Figuren mit unterschiedlichen, den einzelnen Entfernungsintervallen entsprechenden Formen erfolgt und bei abnehmender Entfernung der Vorgang umgekehrt verläuft.

## Patentansprüche

1. Universal-Warnstreifen, bestehend aus Elementen passiver visueller Signalisation, d.h. aus lichtreflektierenden Elementen, z.B. aus Reflexionsvorrichtungen allein oder einer Reflexionsvorrichtung grösserer Oberfläche hinter einer perforierten Blende, oder aus Elementen aktiver visueller Signalisation, d.h. aus lichtausstrahlenden Elementen, z.B. aus Glühlampen oder einer Lichtquelle grösserer Oberfläche hinter einer perforierten Blende, dadurch gekennzeichnet, dass der Warnstreifen ein optisches Signalfeld aufweist, das aus passiven oder aktiven Lichtelementen (1) zusammengesetzt ist, welche Elemente auf einem dunklen Hintergrund oder auf einem Hintergrund, der Licht stärker oder schwächer als die Elemente ausstrahlt oder reflektiert, in Gruppen geordnet mit gleichen Abständen (2) zwischen den Lichtelementen innerhalb der Gruppen angeordnet sind, dass die Gruppen in Gruppenkomplexen geordnet sind, innerhalb welcher die Abstände (3) zwischen den Gruppen gleich, jedoch grösser als die Abstände (2) zwischen den Lichtelementen innerhalb der Gruppen sind, und dass die Gruppenkomplexe in Komplexsätzen geordnet sind, innerhalb welcher die Abstände (6) zwischen den Gruppenkomplexen gleich, jedoch grösser als die Abstände (3) zwischen den Gruppen innerhalb der Gruppenkomplexe sind.

2. Universalwarnstreifen nach Anspruch 1, dadurch gekennzeichnet, dass eine weitere Vergrösserung des Signalfeldes auf analoge Weise, d.h. durch immer grössere Abstände zwischen aufeinanderfolgenden Zusammenstellungsarten von Lichtelementen, erreicht ist, wobei sowohl die Lichtelemente als auch die einzelnen Zusammenstellungsarten dieser Lichtelemente geometrische Figuren unterschiedlicher Form bilden.

## Claims

1. A universal warning strip, comprising elements of passive visual signalling, i.e. light-reflecting elements, for example reflecting devices on their own or one reflecting device of greater surface area behind a perforated screen, or elements of active visual signalling, i.e. light-emitting elements, for example incandescent lamps or a light source or greater surface area behind a perforated screen, characterized in that the warning strip has an optical signal area which is formed by passive or active light elements (1) which are arranged in groups with equal intervals (2) between the light elements within the groups on a dark background or on a background which emits or reflects light more strongly or more weakly than the elements, the groups are arranged in blocks of groups within which the intervals (3) between the groups are equal but greater than the intervals (2) between the light elements within the groups, and the blocks of groups are arranged in sets of blocks within which the intervals (6) between the blocks of groups are equal but greater than the intervals (3) between the groups within the blocks of groups.

2. A universal warning strip according to claim 1, characterized in that a further enlargement of the signal area is effected in a similar manner, i.e. by increasingly greater intervals between successive types of combination of light elements, both the light elements and the individual types of combination of the said light elements forming geometrical figures of different shapes.

## Revendications

1. Bande universelle de signalisation formée d'éléments de signalisation visuelle passive, c'est-à-dire d'éléments réflèchissant la lumière, par exemple de dispositifs réflèchissants seuls ou d'un dispositif réflèchissant présentant une plus grande surface et dispose en arrière d'un masque perforé, ou encore d'éléments de signalisation visuelle active, c'est-à-dire d'éléments émettant de la lumière, tels que des lampes à incandescence ou une source lumineuse de plus grande surface disposée en arrière d'un masque perforé, caractérisée en ce que la bande de signalisation comprend un champ optique formant signal qui se compose d'éléments lumineux (1) passifs ou actifs, en ce que les éléments précités sont disposés sur un fond sombre ou sur un fond que réflèchit ou diffuse la lumière plus fortement ou plus faiblement que lesdits éléments en ce qu'ils sont agences en groupes avec des écartements (2) egaux entre les différents éléments à l'intérieur d'un groupe que les groupes sont arrangés en complexes de groupes à l'intérieur desquels les écartements (3) entre les groupes sont egaux mais toutefois plus grands que les écartements (2) entre lesdits éléments à l'intérieur d'un même groupe, et en ce que les complexes de groupes sont agencés en ensembles de complexes à l'intérieur desquels les écartements (6) entre les complexes des groupes sont egaux mais toutefois supérieurs aux écartements (3) entre les groupes à l'intérieur d'un complexe.

2. Bande universelle de signalisation selon la revendication 1, caractérisée en ce que l'on obtient une autre augmentation du champ de signalisation de manière analogue, c'est-à-dire en prévoyant des écartements toujours plus grands entre les modes de regroupement successifs desdits éléments lumineux, les éléments lumineux tout comme leurs modes de regroupements separés formant des figures géometriques de formes différentes.

Fig. 1

Fig. 2

Fig. 3

Fig. 4